Europäisches Patentamt

European Patent Office

Office européen des brevets

(11) Publication number: 0 343 018
A2

# EUROPEAN PATENT APPLICATION

(21) Application number: 89305168.0

(22) Date of filing: 22.05.89

(51) Int. Cl.⁴: G 01 J 3/00
G 01 J 3/443

(30) Priority: 20.05.88 JP 121989/88
17.06.88 JP 148271/88
30.11.88 JP 302774/88

(43) Date of publication of application:
23.11.89 Bulletin 89/47

(84) Designated Contracting States: DE FR GB

(71) Applicant: RESEARCH DEVELOPMENT CORPORATION
OF JAPAN
5-2, Nagata-cho 2-chome
Chiyoda-ku Tokyo 100 (JP)

Ichimura, Tsutomu
301, 2nd Green Heights 1-1-20, Mukaiyama
Sendai-city Miyagi (JP)

(72) Inventor: Scott, Ronald Quenton
2-3-51-401, Komegafukuro
Sendai-city Miyagi (JP)

Ichimura, Tsutomu
301, 2nd Green Heights 1-1-20 Mukaiyama
Sendai-city Miyagi (JP)

Inaba, Fumio
Yagiyama Minami
Sendai Miyagi (JP)

(74) Representative: Davies, Christopher Robert et al
Frank B. Dehn & Co. Imperial House 15-19 Kingsway
London WC2B 6UZ (GB)

(54) Spectroscopes.

(57) A compact spectroscope, particularly a sprectrofluoroscope or a microspectroscope, applicable for spectrophotometry of very slight light emission having a high visibility, overcoming the defects of the conventional spectroscope through the use of a transmission-type diffraction grating (G,55) and the combination of a two-dimensional photon counter (D,5Y) as an apparatus for obtaining the image of a very slight light emitting object.

Light from a light emitting body is converted into a point or line source (S) and is specially detected by passing through a lens (L₁,54) having a small numerical aperture and a focus coincident with the source, a transmission type diffraction grating (G,55) and a collecting lens (L₂,56) to a detector (D,57).

FIG. 2

**Description**

## SPECTROSCOPES

The present invention relates to a high-sensitivity spectroscope for very slight light emission, and more particularly, to a spectroscope and a spectrofluoroscope using a transmission diffraction grating adapted to be used for spectral detection of slight light emission or fluorescence observed in a biospecimen, for example. Furthermore, the present invention relates also to a microspectroscope, and more particularly, to a microspectroscope which is high in visibility, small in size, and excellent in operability.

The slight light emitting phenomenon as observed in a biospecimen such as bioluminescence, chemiluminescence and flurescence from a biospecimen is now attracting general attention. For the purpose of spectral detection of such slight light emission, the spectral method using a colored gas filter has conventionally been used. Fig, 1 is a block diagram of an apparatus for this purpose. A specimen emitting slight light is housed in a specimen cell or a container 1 controlled at a constant temperature satisfying measuring conditions by means of a temperature regulator 19. The light from such a light source is collected by means of a rotating oval-cylindrical reflection mirror 2 onto a photoelectric face of a photomultiplier (PM) 3.

Colored glass filters 4 used for spectroanalysis, arranged on a mechanically rotatable disk 5, are automatically inserted in succession for exchange into a measuring light channel in front of the PM 3 by means of a filter drive-controller 6, and the intensity of transmitted light after passing through the filter 4 is counted by the PM 3. The PM 3 used for measurement is cooled by a thermoelectrical cooling temperature controller 7 so as to inhibit thermal noise pulse. Signals from the PM 3 are sent through a pulse amplifier 8 and a pulse height discriminator 9, and counted by an add-subtract counter 10. A chopper 11 and a phase shifter 12 are provided to conduct digital lock-in detection through cyclic on/off of the incident light from the light source. The result of counting by the add-subtract counter 10 is recorded in a digital printer 13, and simultaneously, subjected to data processing necessary for directly determining spectral distribution by a mini-computer 14, the result thereof being displayed by an oscilloscope 15 and an X-Y recorder 16. In this figure, the reference numeral 17 represents a high-tension stabilizing power supply, and the reference numeral 18 represents a preset timer. The spectrophotometry using such colored glass filter, while being superior to a diffraction grating spectroscope in terms of visibility because the light from the specimen is fully detected, requires use of a plurality of colored glass filters, resulting in a very long measuring time.

In the spectroscope using a diffraction grating, a reflection-type diffraction grating is employed because of the capability of concentrating light energy to a diffraction light of a particular dimension. However, because of a large F-number which determines visibility, it is difficult to apply this method for the detection of a slight light emission and a large-scale spectroscope is inevitable.

Various trials have recently been made to achieve Fourier spectrophotometry using a diode array. However, this is applicable only when the light to be measured by spectrophotometry is relatively strong, and it is impossible to apply it for spectrophotometry of very slight biophoton because of the serious noise of diode.

Apart from spectrophotometry of such a very slight light emission, a two-dimensional photon counter as described later is known as an apparatus for obtaining an image of a very slight light emitting body. This apparatus has however been used only in the conventional spectroscope using a diffraction grating, and no trial has ever been made to apply it to a spectroscope having a high visibility applicable for spectrophotometry of a very slight light emission.

However, the one using a plurality of colored glass filters, being excellent in terms of visibility, has the problem of a very long measuring time. The one using a reflection-type diffraction grating, having the advantage of being capable of concentrating light energy on diffraction light of a particular dimension, has the problem in that the large F-number determining visibility makes it difficult to detect a very slight light, and in addition, a large-scale spectroscope is inevitable and the combination of the microscope and the spectroscope is also inevitably complicated. For example, a micro-scopic Raman system has been developed, which is based on the combination of a conventional laser Raman spectroscope and a microscope so as to be capable of measuring Raman spectrum of about 1 nm local region, in which the combination mechanism of the microscopic portion and the laser Raman spectroscope portion is complicated.

For these reasons, it has been impossible to easily perform a microspectroscopic measurement of a specimen emitting slight light.

A microspectroscope has conventionally been used as an apparatus for measuring absorption spectroscopic properties of a specimen having a microscopic size for the purpose of determining quantitative or qualitative nature of absorptiometric substances contained in that specimen, and apparatuses of this type have recently been developed with a view to measuring spectroscopic properties of various kinds of re-emitted light such as bioluminescence, chemical luminescence and fluorescence by radiation of excitation light.

A microspectroscope of this type comprises the combination of a microscope and a spectroscope. As the spectroscope, one using a plurality of colored glass filters or one using a reflection-type diffraction grating are employed.

Even in a transmission-type diffraction grating, it is now possible to achieve a diffraction efficiency almost equal to that in the reflection-type one by providing a precise blaze angle in the shape of the grating groove. The present invention has an object to provide a compact and high-sensitivity spectroscope having a high visibility by overcoming the defects in the conventional spectroscope by using such a transmission-type diffraction grating.

Viewed from one aspect the present invention provides a high-sensitivity spectroscope which comprises means for converting light from a light emitting body in the form of source releasing photons to be spectrally detected into a point or line light source, a lens having a small numerical aperture with the focus thereof at the position of said light source, a transmission-type diffraction grating a collecting lens collecting the light having passed through said diffraction grating, and a detector arranged at the position of said focus.

Viewed from another aspect the present invention provides a spectrofluoroscope which comprises an excitation light source means for converting the light from a specimen emitted in a direction different from that of excitation light from said light source into a point or line light source, a lens having a small numerical aperture with the focus thereof at the position of said light source, a transmission-type diffraction grating a collecting lens collecting the light having passed through said diffraction grating and a detector arranged at the position of said focus.

Viewed from an alternative aspect the present invention provides a microspectroscope which comprises a microscopic optical system for forming an enlarged image of a specimen , a collecting optical system for converting the light from the portion to be spectrally detected of said enlarged image into a point light source or a line light source, a collimate lens having the focus thereof at the position of said point light source or said line light source, a transmission-type diffraction grating for spectrally processing the light having passed through said collimate lens, a collecting lens for collecting the light diffracted by said transmission-type diffraction grating, and a one-dimensional detector or a two dimensional detector installed at the position of said focus of said collecting lens.

There is now available a two-dimensional detector practically applicable for light images, and use of a spectroscope using this detector is said to be under consideration. The present inventors have developed in at least a preferred embodiment a compact spectroscope applicable for spectrophotometry of very slight light emission having a high visibility by overcoming the defects of the conventional spectroscope through the use of such a transmission-type diffraction grating and the combination of a two-dimensional photon counter as an apparatus for obtaining the image of a very slight light emitting object. At least in a preferred embodiment the present invention has an object to further improve the above apparatus to achieve a spectroscope applicable also as a spectrofluorometer. Another object of at least a preferred embodiment is to provide a compact microspectroscope excellent in operability, having a high visibility sufficient to permit detection of very slight light.

Embodiments of the present invention will now be described by way of example only with reference to the accompanying drawings wherein:-

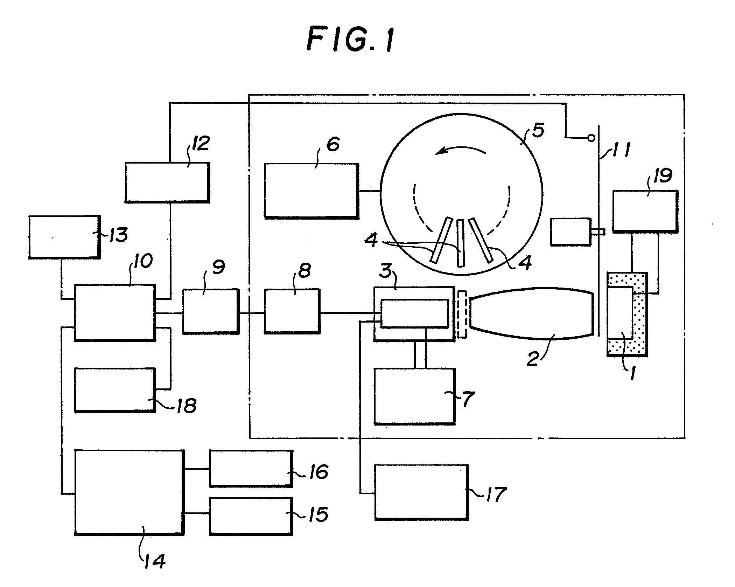

Fig. 1 is a block diagram illustrating a conventional spectroscope using a colored glass filter,

Fig. 2 is an optical layout illustrating an embodiment of the high-sensitivity spectroscope of the present invention,

Fig. 3 is a sectional view illustrating a combination of a two-dimensional photon counter used in this embodiment of the present invention and a low-afterimage business computer,

Fig. 4 is a sectional view illustrating another photon counter type image measuring unit;

Figs. 5 and 6 are optical layouts illustrating another embodiment of the present invention;

Fig. 7 and 8 is a optical layout illustrating an embodiment of the spectrofluoroscope of the present invention;

Fig. 9 is an optical layout illustrating a typical excitation spectroscope; and

Figs. 10 and 11 are optical layouts illustrating the microspectroscope of the present invention;

Figs. 12 and 13 are optical layouts illustrating the spectroscopic detecting optical system used for the multi-wavelength light analyser of an embodiment of the present invention;

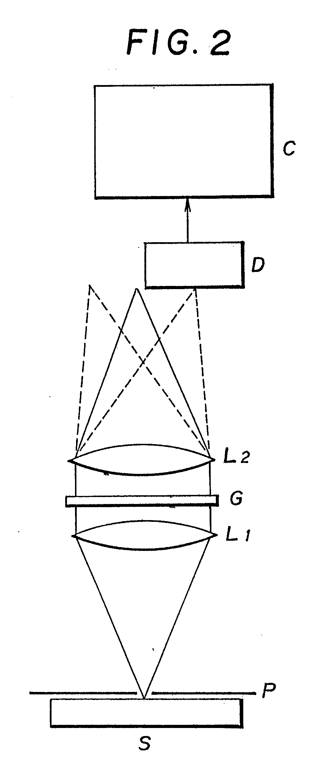

The high-sensitivity spectroscope of the embodiment shown in Fig. 2 is based on the steps of converting the light from a light emitting body S which is the photon emitting source to be subjected to spectrophotometric measurement into a point light source or a line light source by a pinhole P or other means, changing the thus converted light into a parallel luminous flux through a lens $L_1$, of a small numerical aperture, having the focus at the position of that light source, and after spectrometry through a transmission-type diffraction grating G, collecting the light with another lens $L_2$, thereby detecting the wavelength distribution of light intensity at the focal position thereof.

The photon emitting source is stopped down into a point light source or a line light source which is in turn converted into a parallel luminous flux, so that the luminous flux coming into the diffraction grating has a high degree of parallelism, thus permitting full display of the resolution of the diffraction grating.

The light is required to form a parallel luminous flux only for portions of incidence to and emission from the diffraction grating, and the lenses $L_1$ and $L_2$ can be arranged adjacent to each other to permit insertion of the diffraction grating. The spectroscope itself can be made a very compact one.

The lenses $L_1$ and $L_2$ can easily have a high visibility:
as the visibility of the optical system is equal to the sum of those for the both lenses, the overall visibility is further improved.

In Fig. 2, the pinhole P is aligned with a particular portion of a very slight light emitting body S to specify the light emitting portion to be subjected to spectral detection.

Alignment of the pinhole is accomplished by bringing the pinhole to the position of the portion to be covered while observing the image of the light emitting body S with the lens systems $L_1$ and $L_2$ after removing the diffraction grating G. This may be easily carried out by placing the body S on an X-Y movable table, withdrawing the diffraction grating, bringing the position to be covered to the point of intersection of lines crossing at right angles by means of an observing system in which the ocular lens has been replaced with a detector D, and then aligning the pinhole with the point of intersection of the cross.

Among the light emitted from the lens $L_2$, the solid line represents the zero-order light, and the dotted line, the primary light of + and -. In order to detect this primary light, the two-dimensional detector D is arranged by shifting it from the optical axis of the lens systems $L_1$ and $L_2$ so that the diffracted light comes to the center thereof.

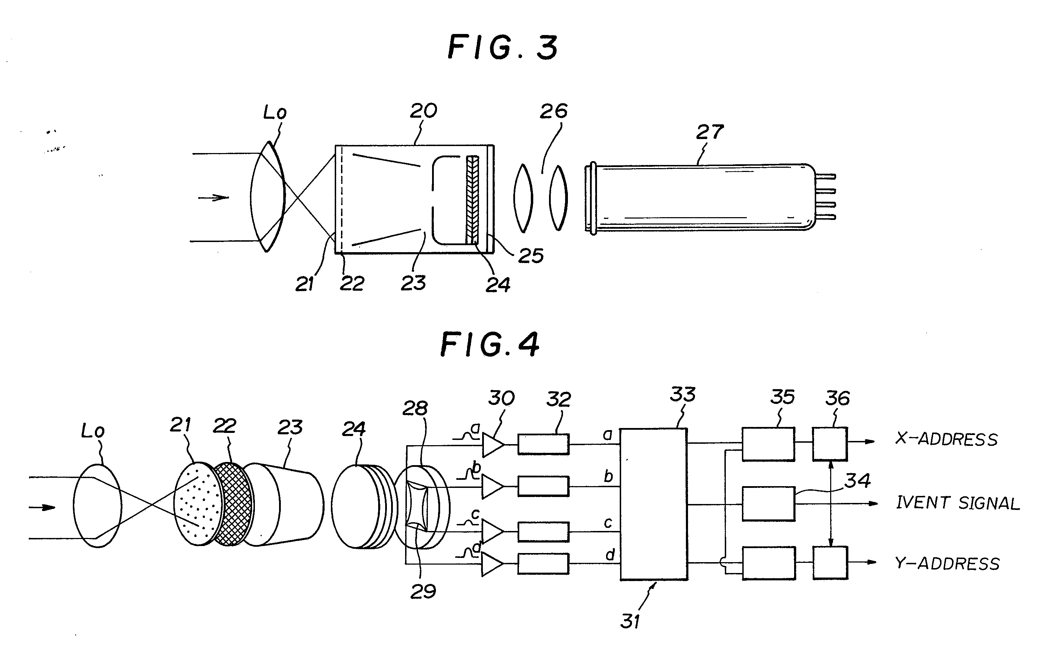

A two-dimensional photon counter is to provide an image of the very slight light emitting body. The detector used in this example is a two-dimensional detector similar to it. Applicable ones include that based on the combination of a two-dimensional photon counter and a low-afterimage vidicon (VIMS) as shown in Fig. 3, and a photon counter type image analysis system (PIAS) as shown in Fig. 4. In Fig. 3, photons released to the photoelectric surface 21 of the two-dimensional photon counter 20 are converted into photo-electrons which are emitted through a mesh 22 and an electronic lens 23 to a two-stage connected micro- channel plate (MCP) 24 to amplify, and hit the fluorescent surface 25 of emission face to form a bright point. This bright point forms an image on the photoelectric surface of the low-afterimage vidicon 27, by lens 26 and the two-dimensional position of the bright point corresponding to a photon can be derived as a pulse signal from the output of the vidicon 27. The image of the very slight light emitting body can thus be obtained by determining the distribution of these bright points.

In the PIAS shown in Fig. 4, the configuration from the photoelectric surface 21 up to the MCP 24 is identical with that shown in Fig. 3 (provided however that, in the example shown in Fig. 4, the MCP 24 is of the three-stage connection). Electrons released from the MCP 24 enter the silicon semiconductor position detector (PSD) 28 immediately following the MCP 24, are further amplified under the electron bombardment effect, and put out in the form of pulse signal from the PSD 28. The PSD 28 is a position detector of the charge distribution type having four signal output electrodes 29 there-around. Electric charge produced in the PSD 28 is distributed through a surface resistance layer to the four electrodes 29 depending upon the respective occurring positions thereof. As a result, signals corresponding to the position of the center of gravity of the electron group coming onto the PSD 28, i.e., to the position of the bright point can be obtained from the four electrodes 29. The pulse signals available from the PSD 28 are amplified by an amplifier 30, and then directed to the position calculator 31, where these pulse signals are integrated through an integrating circuit 32 to determine the amount of charge from the electrodes 29. Then, these signals are sent to an add-subtract circuit 33, then through a window gate 34 to a divider 35 to convert them into position signals which are then A/D-converted by an A/D converter 36 to put out. An image of the very slight light emitting body can be obtained by determining the bright point distribution through processing of these output signals. In Figs. 3 and 4, the symbol $L_0$ indicates the objective lens which forms the image of the incoming photon (shown by the arrow) on the photoelectric surface 21.

In Fig. 2, C represents the computer for processing these signals.

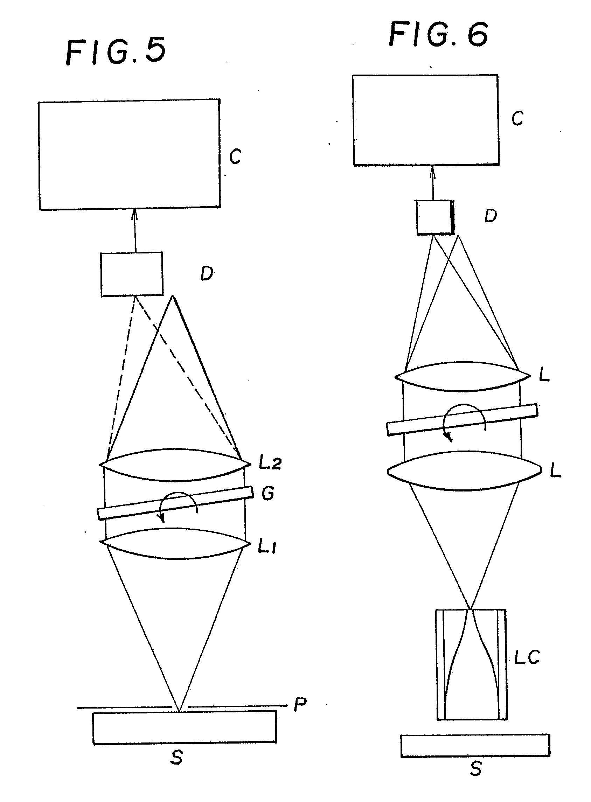

Fig. 5 illustrates another example.

In this example, the diffraction grating G is inclined by an angle equal to the diffraction angle of the light of incidence so that the diffracted light reaches the center of the two-dimensional detector arranged on the optical axis of the lens systems $L_1$ and $L_2$.

Fig. 6 illustrates further another example, in which the light from the very slight light emitting body S is collected by a light collector LC. When a light collector is used as in this example, the light coming in from the bottom repeats reflection on the inner surface, entraps all light emitted within the range covered by the bottom portion, and is emitted from the emitting hole thereof as the light from the point light source. Although the status of light emission for detailed individual portions cannot be detected, this is suitable when spectrally analyzing an average light emission within a certain range because of the increased amount of light.

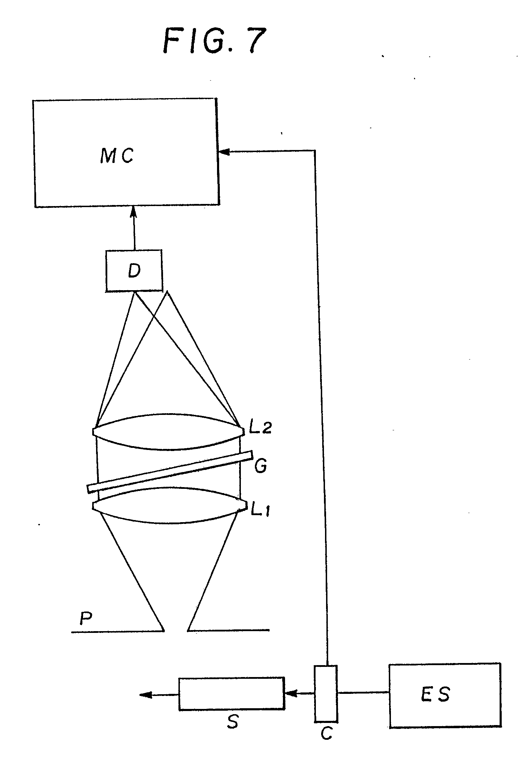

The high-sensitivity spectroscope shown in Fig. 7 is based, as shown on the steps of irradiating excitation light from an excitation light source ES onto a specimen 5, taking out light which has been excited and emitted in a direction different from that of the above excitation light as a point light source or line light source by a pinhole P or other means, making it a parallel luminous flux through a lens $L_1$ having a small numerical aperture with the focus thereof at the position of the above light source, and after spectrometry through a transmission-type diffraction grating G, collecting the light through a lens $L_2$, thereby detecting the wavelength distribution of the light intensity at the focal position thereof. A chopper C may be used as required, for example, when analyzing phosphorescence.

It is possible to take out only fluorescence of a specimen S by irradiating light from the excitation light source ES onto the specimen S, and subjecting to spectrometry the light excited and emitted in a direction different from that of the above excitation light. Phosphorescence can be analyzed by using a chopper C, and subjecting the light emitted after irradiation of the excitation light.

Since the photon emitting source is stopped down to a point light source or a line light source, and the light is converted into a parallel luminous flux through the lens, the luminous flux coming into the diffraction grating has a high degree of parallelism, and thus can fully display the resolution of the diffraction grating.

The light is required to form a parallel luminous flux only for portions of incidence to and emission from the diffraction grating, and the lenses $L_1$ and $L_2$ can be arranged adjacent to each other to permit insertion of the diffraction grating. The spectroscope itself can therefore be made a very compact one.

The lenses $L_1$ and $L_2$ can easily have a high visibility: as the visibility of the optical system is equal to the sum of those for the both lenses, the overall visibility is further improved.

In the example shown in Fig. 7, the pinhole P is aligned with a particular portion of the slight fluorescence emitting body S to specify the light emitting portion to be spectrally analyzed.

Alignment of the pinhole is accomplished by bringing the pinhole to the position of the portion to be covered while observing the image of the light emitting body S with the lens systems $L_1$ and $L_2$ after removing the diffraction grating G. This may be easily carried out by placing the body S on an X-Y movable table, withdrawing the diffraction grating, bringing the position to be covered to the point of intersection of lines crossing at right angles by means of an observing system in which the ocular lens has been replaced with a detector D, and the aligning the pinhole with the point of intersection of the cross.

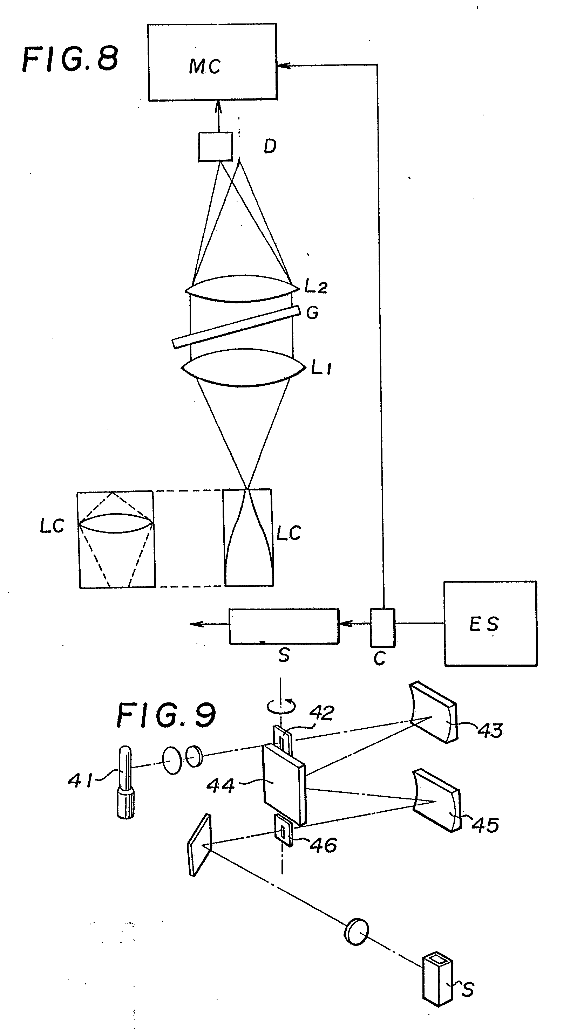

The excitation light source ES which takes out excitation light within a desired wavelength region from the light from a light source such as a xenon lamp by means of a filter or a monochrometer is conventionally known. An example thereof is shown in Fig. 9. In this figure, 41 is a light source; 42 is an inlet slit; 43 is a collimator; 44 is a diffraction grating; 45 is a camera-mirror; and 46 is an exit slit. The light of a cell S through the exit slit by appropriately rotating the diffraction grating 44.

The diffraction grating G is inclined by an appropriate angle so that the diffraction light to be detected reaches the center of the two-dimensional detector D.

A two-dimensional photon counter is to provide an image of the very slight light emitting body. The detector used in this example is a two-dimensional detector similar to it. Applicable ones include that based on the combination of a two-dimensional photon counter and a low-afterimage vidicon (VIMS), and a photon counter type image analysis system (PIAS).

In Fig. 7, MC represents the mini-computer for processing these signals.

By carrying out analysis under irradiation of excitation light without operating the chopper C, it is possible to analyze fluorescence, and by conducting spectral analysis after interrupting the irradiated light by means of the chopper, it is possible to analyze phosphorescence. Furthermore, without irradiating excitation light at all, it is possible to perform spectral analysis of the emitted light of the specimen S itself.

Fig, 8 illustrates further another example.

The light from the specimen S is collected by a light collector LC. When a light collector is used as in this example, the light coming in from the bottom repeats reflection on the inner surface, entraps all light emitted within the range covered by the bottom portion, and is emitted from the emitting hole thereof as the light from the point light source. Although the status of light emission for detailed individual portions cannot be detected, this is suitable when spectrally analyzing an average light emission within a certain range because of the increased amount of light. A collecting system configured with a lens system may be used as the light collector LC.

For the achievement of at least some of the objects as described above, a preferred embodiment of the present invention provides a microspectroscope which comprises a microscope optical system forming an enlarged image of the specimen, a collecting optical system converting the light from the portion to be spectrally tested of that enlarged image into a point light source or a line light source, a collimate lens having the focus thereof at the position of the point light source or the line light source, a transmission-type diffraction grating performing spectrometric action of the light passing through the collimate lens, a collecting lens collecting the light diffracted by the transmission-type diffraction grating, and a one-dimensional detector or a two-dimensional detector installed at the focal position of the collecting lens.

The microspectroscope of the present embodiment is similar to the conventional microspectroscope in that a microscope optical system and a spectroscope are combined. Any of the various microscopic optical systems, which comprises an objective system and an ocular system, is applicable as the microscopic optical system in the present embodiment, as in the conventional microspectroscopic. As the spectroscope, however, the multi-wave-length detector ("high-sensitivity spectroscope") previously developed by the present inventors is applied so as to permit easy and high-sensitivity microspectroscopic measurement with a compact apparatus. Now, the microspectroscope of the present embodiment is described in detail with reference to the drawings.

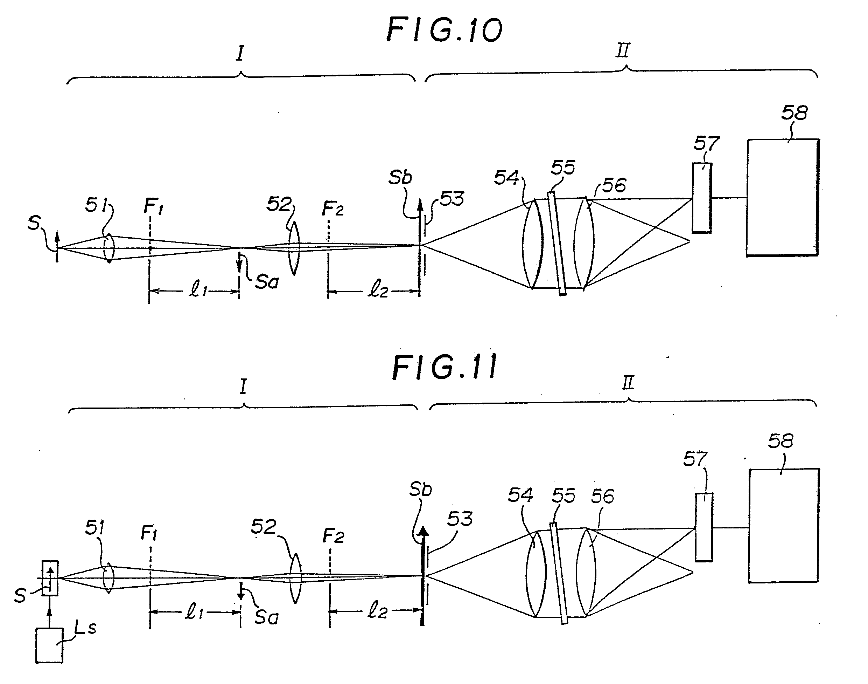

Fig. 10 is an optical layout illustrating a typical overall configuration of the microspectroscope of the present invention. The microspectroscope shown in Fig. 10 comprises a microscopic optical system (I) forming an enlarged image of a specimen (S), and a spectroscopic detecting optical system (II) spectrally detecting light from the portion of the enlarged image to be spectrally tested. The microscopic optical system (I) comprises an illuminating light source (not shown) for the specimen (S), a specimen stand (not shown), an objective lens system 51 having an objective focus ($F_1$), and an ocular lens system 52 having an ocular focus ($F_2$). In this microscopic optical system (I), an objective image (Sa) of the specimen (S) is formed by the objective lens system 51 at a distance ($\ell_1$) from the objective focus ($F_1$), and an enlarged image (Sb) thereof is formed by the ocular lens system 52 at a distance ($\ell_2$) from the ocular focus ($F_2$).

The microscopic optical system (I) may have, as in the microspectroscope of the present embodiment shown in Fig. 11, an exciting light source (Ls) for the specimen (S) so as to form an enlarged image of the light emitted from the specimen (S) irradiated by the exciting light source (Ls). This permits analysis of fluorescence, for example, of the specimen (S) in a local region. In this case, while a conventional exciting light source used for analysis of fluorescence is applicable as the exciting light source (Ls), one capable of selecting a wavelength is particularly preferable.

The spectroscopic optical system (II) is to convert the enlarged image (Sb) of the specimen (S) formed by the microscopic optical system (I) into a point light source or a line light source by means of the collecting optical system 53 and then spectrally analyze it, and has a construction incorporating the multi-wavelength detector developed by the present inventors as described above. More specifically, this spectroscopic detector system (II) has a collecting optical system 53 converting the enlarged image (Sb) of the specimen (S) into a point light source or line light source, a collimate lens 54 with a small numerical aperture having the focus thereof at the position of the point light source or the line light source, a transmission-type diffraction grating 55 spectrally processing the light having passed through the collimate lens 54, a collecting lens 56 collecting the light having been diffracted through the transmission-type diffraction grating 55, and a one- dimensional detector or a two-dimensional detector 57 installed at the focal position of the collecting lens 56. A computer 58 is connected to the output side of the one-dimensinal detector or the two-dimensional detector 57.

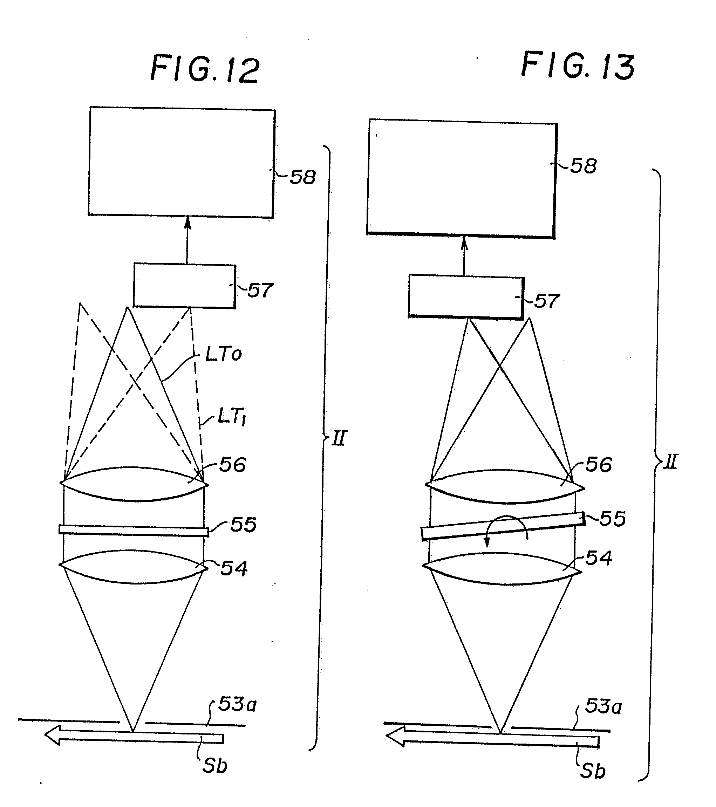

As the collecting optical system 53 in this case, any optical system capable of taking out the light from the enlarged image (Sb) of the specimen (S) in the point or line form may be used without a particular limitation. For example, as in the spectroscopic optical system (II) shown in Fig. 12 or 13, the light from the enlarged image (Sb) may be reduced by installing a pinhole or a slit 53a on the display surface of the enlarged image (Sb), or as in the spectroscopic optical system (II) using a light connector which collects the light from the enlarged image (Sb) through a collecting window and emits it to a point or line-shaped emitting end.

When spectrally analyzing the light from the enlarged image (Sb) of the specimen through such a spectroscopic optical system (II), the diffracted light emitted from the collecting lens 56 forms a zero-order light $LT_0$ indicated by a solid line in Fig. 12 or a primary light $LT_1$ of + and - indicated by a broken line in Fig. 12. It is therefore necessary to make an adjustment so that the diffracted light to be detected is at the center of the one-dimensional detector or the two-dimensional detector 57. For this adjustment, the position of the one-dimensional detector or the two-dimensional detector 57 may be made shiftable from the optical axis of the collimate lens 54 and the collecting lens 56, or as shown in Fig. 13, the installation angle of the transmission-type diffraction grating relative to the collimate lens 54 and the collecting lens 56 may be made changeable.

As the one-dimensional detector or the two-dimensional detector 57, a high-sensitivity one capable of detecting simultaneously multiple wave lengths must be used. Examples of such a one-dimensional detector include the detector which doubles electrons emitted from the photoelectric surface by means of a microchannel plate, causes the thus doubled electrons to emit light by means of a fluoresent surface, and detects the thus light-emitting fluorescent surface with the use of a diode array ("SMS" made by Princeton Instrument, "DRSS" made by Traco Northern, etc.), and the detector using a charge-coupled device (CCD) or a plasma-coupled device (PCD) ("Cooling-type CCD camera," "Multi-Channel" made by Hamamatu Photonix), Examples of detectors applicable as the two-dimensional detector include the detector doubling electrons released from the photoelectric surface by means of a micro-channel plate and detecting the thus doubled electrons by means of a phase detector ("PIAS (photon-type image analyzing system)" made by Hamamatsu Photonix, "PSD" made by S.S.I., etc.) and the detector which doubles electrons released from a photoelectric surface by means of a micro-channel plate, and causes the thus doubled electrons to emit light, and detects the fluorescent surface thus emitting light with a vidioon ("VIM (video image processor for microscope)" made by Hamamatsu Photonix),

The spectroscopic detection optical system (II) of the present embodiment, which comprises, as described above, the collecting optical system 53, the collimate lens 54, the transmission-type diffraction grating 55, and the one-dimensional detector or the two-dimensional detector 57, achieves the following excellent functions when spectrally analyzing the enlarged image (Sb) of the specimen (S). More specifically, the collecting optical system 53 causes incidence of the light from the enlarged into the collimate lens 54 as the point light source or the line light source, and the collimate lens 54 causes incidence of the light from the enlarged image (Sb) into the transmission-type diffraction grating 55 in the form of a parallel light having a high degree of parallelism. The transmission-type diffraction grating 55 can thus fully display its resolution. Since the distance between the collimate lens 54 and the collecting lens 56 can be minimized so far as the transmission-type diffraction grating 55 can be inserted, a compact size of the apparatus can be achieved. A lens of a small F-value having a high visibility is applicable as the collimate lens 54 and the collecting lens 56. The visibility of the entire system based on the combination of the both lenses can therefore be sufficiently improved, thus permitting detection of very slight light. The light from the enlarged image (Sb) spectrally formed by the transmission-type diffraction grating 55 is detected by means of the high-sensitivity one-dimensional detector or the two-dimensional detector 57 which is capable of simultaneously detecting multiple wave lengths. It is therefore possible to simultaneously analyze multiple wave length of very slight light.

In the present embodiment, as described above, the light from the very small emission hole is converted into a parallel luminous flux, and the transmission-type diffraction grating is arranged in this parallel luminous flux. The light has therefore a high degree of parallelism, thus permitting full display of the resolution of the diffraction grating. Use of the two lenses leads to a small F-value, it suffices to provide a space for insertion of the diffraction grating between the two lenses, and as a result, the spectroscope can be configured into a very compact size.

In the present embodiment, furthermore, it is possible to perform spectral analysis not only of fluorescence and phosphorescence of a specimen, but also of the emitted light of the specimen itself. The light from the very small emission hole is converted into a parallel luminous flux, and the transmission-type diffraction grating is arranged in this parallel luminous flux. The light has therefore a high degree of parallelism, thus permitting full disply of the resolution of the diffraction grating. Use of the two lenses leands to a small F-value. It therefore suffices to provide a space for insertion of the diffraction grating between the two lenses, and as a result, the spectroscope can be configured into a very compact size.

A multi-wavelength detector capable of easily analyzing simultaneously multiple wave lengths of very slight light is used as the spectroscope in the micro-spectroscope of the present embodiment. It has therefore a high visibility, can detect very slight light, and provides a high operability with a compact size.

## Claims

1. A high-sensitivity spectroscope which comprises means (P) for converting light from a light emitting body in the form of source (S) releasing photons to be spectrally detected into a point or line light source, a lens (L₁) having a small numerical aperture with the focus thereof at the position of said light source, a transmission-type diffraction grating (G), a collecting lens (L₂) collecting the light having passed through said diffraction grating, and a detector (D) arranged at the position of said focus.

2. A high-sensitivity spectroscope as claimed in Claim 1, wherein said member (P) for converting the light from said light emitting body into a point or line light source is a pinhole or a slit.

3. A high-sensitivity spectroscope as claimed in Claim 1, wherein said member (P) for converting the light from said light emitting body into a point or line light source is a light collector (LC).

4. A spectrofluoroscope which comprises an excitation light source (ES), means (P) for converting the light from a specimen emitted in a direction different from that of excitation light from said light source into a point or line light source, a lens (L₁) having a small numerical aperture with the focus thereof at the position of said light source, a transmission-type diffraction grating (G), a collecting lens (L₂) collecting the light having passed through said diffraction grating (G), and a detector (D) arranged at the position of said focus.

5. A spectrofluoroscope as claimed in Claim 4, wherein said member (P) for converting the light from said specimen into a point or line light source is a pinhole or a slit.

6. A spectrofluoroscope as claimed in Claim 4, wherein said member (P) for converting the light from said specimen into a point or line light source is a light collector.

7. A spectrofluoroscope as claimed in any one of Claims 4 to 6, wherein said spectrofluoroscope has a chopper (C) for making said excitation light intermittent light.

8. Apparatus as claimed in any preceding claim in which said detector (D) is a two-dimensional detector.

9. A microspectroscope which comprises a microscopic optical system (I) for forming an enlarged image (Sb) of a specimen (S), a collecting optical system (53) for converting the light from the portion to be spectrally detected of said enlarged image into a point light source or a line light source, a collimate lens (54) having the focus thereof at the position of said point light source or said line light source, a transmission-type diffraction grating (55) for spectrally processing the light having passed through said collimate lens, a collecting lens (56) for collecting the light diffracted by said transmission-type diffraction grating, and a one-dimensional detector (57) or a two dimensional detector (57) installed at the position of said focus of said collecting lens.

10. A microspectroscope as claimed in Claim 9, wherein said microscopic optical system (I) includes an exciting light source (Lₛ) for irradiating the specimen (S), the wave length of exciting light emitted by said source being selectable, said system (I) forming an enlarged image of the re-emitted light of the specimen irradiated with said exciting light source.

# FIG.1

EP 0 343 018 A2

# FIG. 2

C

D

L2

G

L1

P

S

FIG. 3

FIG. 4

# FIG. 5

# FIG. 6

# FIG. 7

FIG.8

FIG.9

# FIG.10

# FIG.11

EP 0 343 018 A2

## FIG.12

58

57

LTo

LTi

56

55

54

53a

Sb

II

## FIG.13

58

57

56

55

54

53a

Sb

II